# EUROPÄISCHE PATENTSCHRIFT

(11) **EP 4 294 729 B1**
(45) Veröffentlichungstag und Bekanntmachung des Hinweises auf die Patenterteilung: **06.11.2024**
(21) Anmeldenummer: 22738667.9
(22) Anmeldetag: 05.07.2022
(51) Int. Cl.: B64F 1/22, B60P 3/11, G05D 1/00, B64F 1/227, B64F 1/228

(54) **FERNSTEUERBARE HEBE- UND/ODER TRANSPORTANORDNUNG**
REMOTE-CONTROLLABLE LIFTING AND/OR TRANSPORTING ARRANGEMENT
AGENCEMENT DE LEVAGE ET/OU DE TRANSPORT POUVANT ÊTRE COMMANDÉ À DISTANCE

(30) Priorität: 13.07.2021 DE 102021118081
(43) Veröffentlichungstag der Anmeldung: 27.12.2023
(73) Patentinhaber: Haug, Thomas, 75217 Birkenfeld (DE)
(72) Erfinder: Haug, Thomas, 75217 Birkenfeld (DE)
(74) Vertreter: Wacker, Jost Oliver
(86) Internationale Anmeldenummer: PCT/EP2022/068518
(87) Internationale Veröffentlichungsnummer: WO 2023/285200

(56) Entgegenhaltungen:
- EP-A1- 3 444 790
- DE-A1- 102008 028 434
- DE-A1- 102019 117 454
- US-A1- 2017 057 663
- US-B1- 6 305 484

## Beschreibung

Die Erfindung betrifft eine Hebe- und/oder Transportanordnung mit einem fernsteuerbaren Hebe- und/oder Transportgerät, wie insbesondere einem Flugzeugpusher, nach dem Oberbegriff des Anspruchs 1 sowie ein Verfahren zum Betrieb einer solchen Hebe-/Transportanordnung. Diese weist einen Fernsteuerungssender zur Steuerung einer Hub- und/oder Transportbewegung des Hebe- und/oder Transportgerätes sowie eine Sicherheitseinrichtung auf, an der Daten zur Festlegung eines sich horizontal erstreckenden, virtuellen Freigabebereiches hinterlegt sind und die eine Sensorik zur Ermittlung einer Position des Fernsteuerungssensors aufweist. Dabei ist mittels der Sicherheitseinrichtung ein Steuerungsvorgang des Fernsteuerungssenders in Abhängigkeit einer aktuell detektierten Position des Fernsteuerungssenders gegenüber dem Freigabebereich durchführbar oder unterbindbar beziehungsweise blockierbar.

Aus EP3756946A1 ist ein Verfahren zur Erhöhung der Betriebssicherheit einer Hubladebühne für ein Fahrzeug bekannt. Dabei ist vorgesehen, dass die Ansteuerung der Hubladebühne durch einen Fernsteuerungssender nur dann freigegeben wird, wenn sich dieser in einem Bereich befindet, der eine für einen sicheren Betrieb ausreichende Sicht auf die Hubladebühne gewährleistet. Dabei erfolgt die Lageerfassung des Fernsteuerungssenders in einer bestimmten Höhe. DE 10 2019 117454 A1 offenbart eine Hebe- und/oder Transportanordnung ähnlich dem Oberbegriff des Anspruchs 1.

Über die Sicherheitsfunktionen dieser aus dem Stand der Technik bekannten Sicherheitseinrichtung hinaus, besteht bei bestimmten Hebe- und/oder Transportanordnungen ein Bedarf zur Absicherung von weiteren Betriebssituationen, die von den bekannten Sicherheitseinrichtungen nicht erfasst werden können. Beispielsweise müssen bei einem Flugzeugpusher Anwendungen vermieden werden, die vom Versicherungsschutz nicht abgedeckt sind. Eine solche unzulässige Anwendung liegt beispielsweise vor, wenn eine den Flugzeugpusher bedienende Person selbst im Cockpit des zu verlagernden Flugzeugs sitzt.

Die Aufgabe der Erfindung ist es, bei einer gattungsgemäßen Hebe- und/oder Transportanordnung die genannten Nachteile zu vermeiden und bei einer größeren Bandbreite von Hebe- und/oder Transportanordnungen einen sicheren Betrieb zu gewährleisten beziehungsweise je nach Art der jeweiligen Hebe- und/oder Transportanordnung eine unsichere beziehungsweise unzulässige Betriebsweise wirksam zu unterbinden.

Diese Aufgabe wird durch ein Hebe- und/oder Transportanordnung mit den Merkmalen des Anspruchs 1 gelöst. Dabei weist der Freigabebereich auch in einer vertikalen Richtung eine begrenzte Vertikalerstreckung auf. Zudem sind an der Sensorik der Sicherheitseinrichtung Höhenbestimmungsmittel zur Ermittlung einer aktuellen Höhenlage des Fernsteuerungssenders vorgesehen. Dabei kann der Steuerungsvorgang zusätzlich in Abhängigkeit von einer aktuell ermittelten Höhenlage des Fernsteuerungssenders bezüglich der Vertikalerstreckung des Freigabebereichs zur Durchführung freigegeben oder unterbunden werden. Hierdurch kann auch ein sicherer Betrieb von Hebe- und/oder Transportgeräten gewährleistet werden, bei denen die Sicherheit von einer vertikalen Position des Fernsteuerungssenders beziehungsweise dessen Benutzers gegenüber der vertikalen Lage des Hebe- und/oder Transportgerätes abhängt. Beispielsweise kann dadurch verhindert werden, dass ein Flugzeugpusher von einer ungeeigneten oder unzulässigen Position aus gesteuert wird, wie insbesondere aus dem Cockpit eines entsprechenden Flugzeuges heraus.

Bevorzugterweise ist die Vertikalerstreckung des Freigabebereichs dabei als Höhendifferenzbereich gegenüber dem Hebe- und/oder Transportgerät bestimmt, während die Höhenlage in Form einer Höhendifferenz des Fernsteuerungssenders gegenüber dem Hebe- und/oder Transportgerät ermittelt wird. Dadurch kann der Freigabebereich in vertikaler Richtung exakt begrenzt werden. Zudem kann auf diese Weise relativ einfach ermittelt werden, ob sich der Fernsteuerungssender innerhalb oder außerhalb der Vertikalerstreckung des Freigabebereichs befindet.

Vorteilhafterweise weist der Freigabebereich eine maximale Höhe von 2 m gegenüber einem Untergrund auf, auf dem das Hebe- und/oder Transportgerät steht beziehungsweise bewegt wird. Auf diese Weise kann insbesondere bei Flugzeugpushern eine unzulässige Steuerung aus einem Cockpit des zu verlagernden Flugzeuges heraus generell unterbunden werden.

Vorteilhafterweise sind Sendemittel des Fernsteuerungssenders vorgesehen, die zur Unterbindung des Steuerungsvorgangs mittels der Sicherheitseinrichtung gestoppt beziehungsweise blockiert werden können. Auf diese Weise kann eine Übertragung von Steuerungssignalen, durch die das jeweilige Hebe- und/oder Transportgerät in unzulässiger Weise betrieben werden könnte, zuverlässig vermieden werden.

Alternativ hierzu kann das fernsteuerbare Hebe- und/oder Transportgerät zur Unterbindung des Steuerungsvorgangs durch Übertragung eines Nullsignals eines Fahrkanals seitens des Fernsteuerungssenders in einer Ruheposition fixiert werden. Auf diese Weise kann das Hebe- und/oder Transportgerät bei einer sich außerhalb des Freigabebereichs befindlichen Position des Fernsteuerungssenders auch aktiv in einer Ruhestellung gehalten werden, um einen unzulässigen Betrieb zu unterbinden.

Vorteilhafterweise wird die jeweils aktuelle Höhenlage des Fernsteuerungssenders durch die Höhenbestimmungsmittel insbesondere kontinuierlich wiederkehrend ermittelt. Durch eine derartige online-Bestimmung der Höhenlage beziehungsweise der Höhendifferenz während des Betriebs einer Hebe- und/oder Transportanordnung können Veränderungen der relativen Höhenlage des Fernsteuerungssenders gegenüber dem Hebe- und/oder Transportgerät zeitnah erfasst werden, um den Betrieb in Abhängigkeit der Höhenlage des Fernsteuerungssenders bezüglich der Vertikalerstreckung des Freigabebereichs zuzulassen oder zu unterbinden. Die Höhenbestimmungsmittel können dabei je nach Funktionsweise nur am Hebe- und/oder Transportgerät oder am Fernsteuerungssender vorgesehen sein oder alternativ hierzu an beiden Einheiten.

Hierbei ist es günstig, wenn die Höhenbestimmungsmittel eine erste Höhenmessungseinrichtung am Hebe- und/oder Transportgerät und eine zweite Höhenmesseinrichtung am Fernsteuerungssender aufweisen, um durch entsprechende Informationsübertragung zwischen beiden Geräten die jeweils aktuelle Höhendifferenz beziehungsweise die Position des Fernsteuerungssenders bezüglich des Freigabebereichs bestimmen zu können. Die Höhenmesseinrichtungen können dabei alle bekannten und geeigneten Mittel zur Höhenbestimmung umfassen, wie beispielsweise GPSbeziehungsweise GNSS-Empfänger oder eine barometrisch, gravimetrisch oder trigonometrisch arbeitende Sensorik.

Ferner wird die oben genannte Aufgabe durch ein Verfahren zum Betrieb einer Hebe-/Transportanordnung in einer der oben genannten Ausführungsformen gelöst, bei dem in einem ersten Schritt der Freigabebereich vorab definiert und in der Sicherheitseinrichtung datenmäßig abgelegt wird,. In einem zweiten Schritt wird dann eine aktuelle Position des Fernsteuerungssenders detektiert und mit dem hinterlegten Freigabebereich abgeglichen. In einem dritten Schritt wird der Steuerungsvorgang dann entsprechend der am Fernsteuerungssender eingegebenen Steuerungsanweisung in Abhängigkeit davon freigegeben, ob sich der Fernsteuerungssender aktuell im Freigabebereich befindet. Dabei ist vorgesehen, dass im ersten Schritt der Freigabebereich auch in vertikaler Richtung begrenzt wird und im zweiten Schritt eine aktuelle Höhenlage des Fernsteuerungssenders ermittelt und mit der Vertikalerstreckung des Freigabebereichs abgeglichen wird. Auf diese Weise kann bei Hebe- und/oder Transportgeräten der Betrieb insbesondere in Abhängigkeit von einer geeigneten vertikalen Position des Fernsteuerungssenders beziehungsweise dessen Benutzers gegenüber der vertikalen Lage des Hebe- und/oder Transportgerätes freigegeben oder blockiert beziehungsweise gestoppt werden. Beispielsweise kann dadurch verhindert werden, dass ein Flugzeugpusher von einer ungeeigneten Position aus gesteuert wird, wie insbesondere aus dem Cockpit eines zu verlagernden Flugzeuges heraus.

Dabei wird im zweiten Schritt vorteilhafterweise die Höhenlage des Fernsteuerungssenders in Form von dessen Höhendifferenz relativ zum Hebe- und/oder Transportgerät ermittelt und mit dem Höhendifferenzbereich des Freigabebereichs abgeglichen. Hierdurch kann in zuverlässiger und einfacher Weise festgestellt werden, ob sich der Fernsteuerungssender in vertikaler Richtung innerhalb des Freigabebereichs befindet und somit ein Steuerungsvorgang des Fernsteuerungssenders durchgeführt werden kann.

Vorteilhafterweise wird hierbei die Höhendifferenz im zweiten Schritt sowohl am Fernsteuerungssender als auch am Hebe-/Transportgerät mittels GPS- beziehungsweise GNSS-Signal, barometrisch, gravimetrisch und/oder trigonometrisch ermittelt. Die hierfür benötigten Mittel, wie beispielsweise GPS-Empfänger, Druck- oder optische Sensoren, sind dabei in handelsüblichen Ausführungen erhältlich, wodurch die benötigten Messeinrichtungen für die insbesondere höhenmäßige Positionsbestimmung des Fernsteuerungssenders bezüglich des vorgegebenen Freigabebereichs kostengünstig zur Verfügung gestellt werden können.

Zudem ist es günstig, wenn im dritten Schritt die Sendemittel aktive Steuerungssignale aussenden, mittels denen das Hebe- und/oder Transportgerät in einer Ruheposition gehalten wird, wenn die detektierte aktuelle Position des Fernsteuerungssenders außerhalb des Freigabebereiches liegt. Hierdurch kann ein unzulässiger Betrieb des Hebe-/Transportgerätes, insbesondere durch Übertragung eines Nullsignals eines Fahrkanals seitens des Fernsteuerungssenders aktiv unterbunden und das Hebe-/Transportgerät aktiv in einer Ruheposition fixiert werden.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine Draufsicht auf eine erfindungsgemäße Hebe- und/oder Transportanordnung,
- Figur 2: eine seitliche Ansicht der Hebe- und/oder Transportanordnung nach Figur 1,
- Figur 3: eine vergrößerte Ansicht eines Fernsteuerungssenders der Hebe- und/oder Transportanordnung nach Figur 2 und
- Figur 4: ein Ablaufdiagramm eines Verfahrens zum Betrieb der Hebe- und/oder Transportanordnung nach Figur 1.

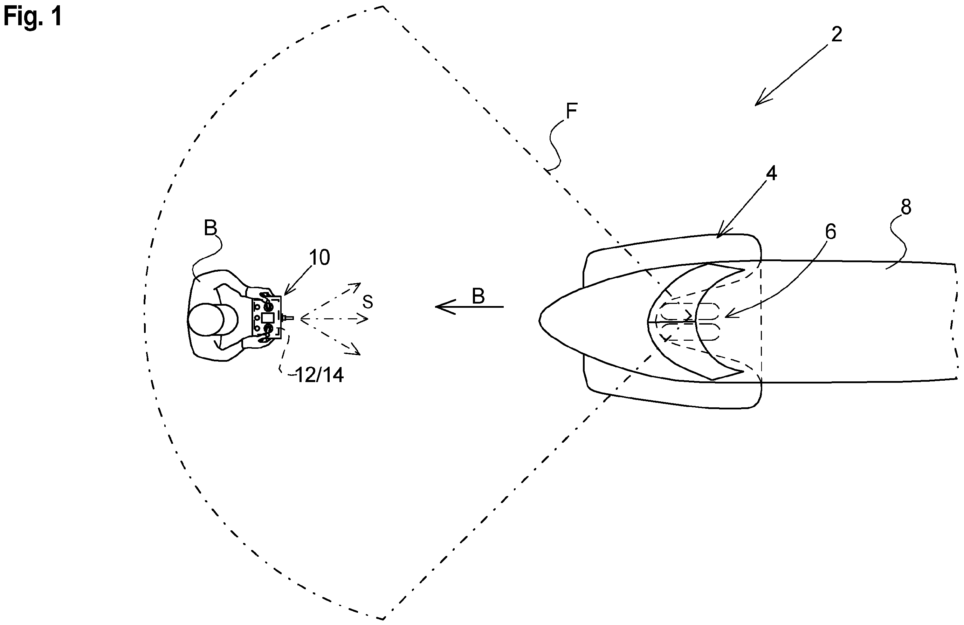

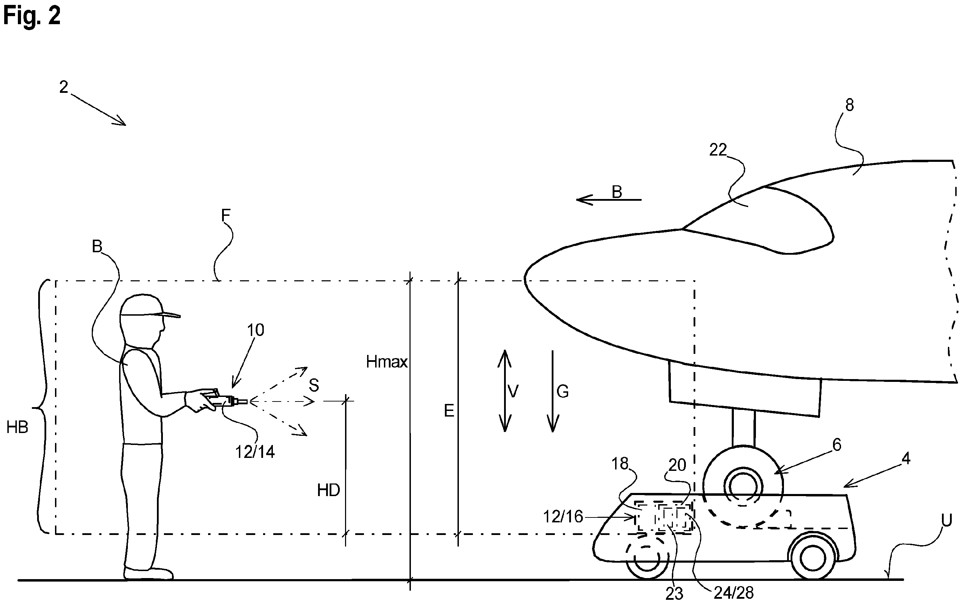

Die Figuren 1 und 2 zeigen eine Hebe- und/oder Transportanordnung 2 mit einem Hebe- und/oder Transportgerät 4 in beispielhafter Form eines Flugzeugpushers, an dem ein Bugfahrwerk 6 eines Flugzeuges 8 festgelegt werden kann, um das Flugzeug 8 unabhängig von dessen eigenem Antrieb verlagern zu können, wie beispielsweise zu oder von einem Stellplatz, insbesondere in einem Hangar.

Zur Steuerung einer Hub- und/oder Transportbewegung des Hebe- und/oder Transportgerätes 4 ist dabei ein insbesondere tragbarer Fernsteuerungssender 10 vorgesehen, der von einem Benutzer B händisch gehalten und bedient werden kann.

Um sicherzustellen, dass sich der Benutzer B des Fernsteuerungssenders 10 während eines Steuerungsvorganges an einem Standort befindet, von dem aus er die für die jeweilige Hub- und/oder Transportbewegung relevante Umgebung des Hebe- und/oder Transportgerätes 4 beziehungsweise des Flugzeuges 8 ungehindert einsehen kann, weist die Hebe- und/oder Transportanordnung 2 eine Sicherheitseinrichtung 12 auf. Diese ist in der dargestellten Ausführungsform teilweise an einer Senderelektronik 14 des Fernsteuerungssenders 10 sowie teilweise an einer Geräteelektronik 16 des Hebe- und/oder Transportgerätes 4 ausgeführt. Alternativ hierzu kann die Sicherheitseinrichtung 12 auch lediglich am Fernsteuerungssender 10 oder lediglich am Hebe- und/oder Transportgerät 4 vorgesehen sein.

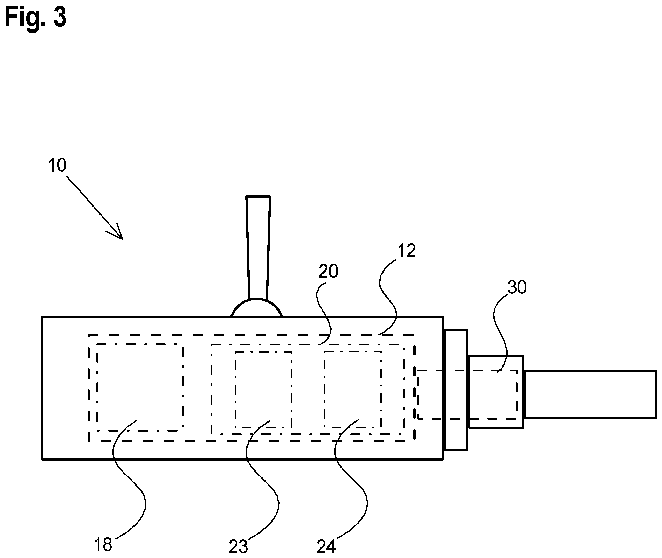

In jedem Fall umfasst die Sicherheitseinrichtung 12, wie aus Figur 3 zu entnehmen ist, wenigstens Datenverarbeitungsmittel 18 zur Speicherung und Verarbeitung eines Datensatzes zur Festlegung eines virtuellen Freigabebereichs F sowie eine Sensorik 20 zur Ermittlung einer aktuellen Position des Fernsteuerungssenders 10 bezüglich des virtuellen Freigabebereichs F. Dabei kann der Freigabebereich F bezüglich des Hebe- und/oder Transportgerätes 4 fest vorgegeben sein oder beispielsweise in Abhängigkeit eines jeweils aktuellen Steuerbefehls angepasst beziehungsweise verändert werden.

In jedem Fall weist der Freigabebereich F dabei eine horizontal begrenzte Erstreckung gemäß Figur 1 auf, die beispielsweise kreisförmig oder, wie dargestellt, kreissegmentförmig ausgebildet ist und sich insbesondere in einer aktuell angesteuerten Bewegungsrichtung B vom Hebe- und/oder Transportgerät 4 weg erstreckt.

Wie aus Figur 2 zu entnehmen ist, weist der Freigabebereich F zudem auch in einer vertikalen Richtung V, insbesondere parallel zur Gravitationsrichtung G, eine begrenzte Vertikalerstreckung E auf. Die begrenzte Vertikalerstreckung E ist dabei durch einen Höhendifferenzbereich HB gegenüber dem Hebe- und/oder Transportgerät 4 gebildet, der nach oben eine maximale Höhe Hmax von 2 m gegenüber einem Untergrund U aufweist. Hierdurch erstreckt sich der Freigabebereich F zumindest unterhalb eines Sichtbereiches eines Cockpits 22 des Flugzeugs 8.

Die Sensorik 20 der Sicherheitseinrichtung 12 weist dabei neben Positionsbestimmungsmitteln 23, die zur Ermittlung einer aktuellen horizontalen Position des Fernsteuerungssenders 10 dienen, zusätzlich auch Höhenbestimmungsmittel 24 auf. Mittels diesen Höhenbestimmungsmitteln 24 kann eine jeweils aktuelle Höhenlage H des Fernsteuerungssenders 10 beziehungsweise eine Höhendifferenz HD des Fernsteuerungssenders 12 gegenüber dem Hebe- und/oder Transportgerät 4 oder dem Untergrund U wiederkehrend ermittelt werden kann. Die Höhenbestimmungsmittel 24 können dabei beispielsweise eine erste Höhenmesseinrichtung 26 des Fernsteuerungssenders 10 (gemäß Figur 3) und eine zweite Höhenmesseinrichtung 28 des Hebe- und/oder Transportgerätes 4 (gemäß Fig. 2) umfassen, die durch bekannte und geeignete Messeinrichtungen gebildet sind, wie beispielsweise durch GPSbeziehungsweise GNSS-Empfänger oder eine barometrisch, gravimetrisch oder trigonometrisch arbeitende Sensorik.

Mittels der Positionsbestimmungsmittel 23 der Sicherheitseinrichtung 12 kann somit die relative horizontale Position des Fernsteuerungsgerätes 10 gegenüber dem Hebe- und/oder Transportgerät 4 ermittelt werden. Zusätzlich hierzu kann durch die Höhenbestimmungsmittel 24 der Sicherheitseinrichtung 12 fortlaufend geprüft werden, ob die Höhenlage des Fernsteuerungssenders 10 innerhalb des vorgegebenen Höhendifferenzbereichs HB liegt und ob sich der Fernsteuerungssender insgesamt innerhalb des Freigabebereichs F befindet.

In Abhängigkeit von diesen wiederkehrenden Positionsbestimmungen des Fernsteuerungssenders 10 gegenüber dem virtuellen Freigabebereich F gibt die Sicherheitseinrichtung 12 den Steuerungsvorgang entweder frei oder blockiert diesen beziehungsweise stoppt einen zuvor freigegebenen Steuerungsvorgang.

Zum Blockieren oder Stoppen des Steuerungsvorganges können dabei Sendemittel 30 des Fernsteuerungssenders 10 (gemäß Figur 3) gestoppt beziehungsweise abgeschaltet werden. Alternativ hierzu kann der Steuerungsvorgang auch dadurch gestoppt werden, dass die Sicherheitseinrichtung 12 auf einem Fahrkanal des Fernsteuerungssenders 10 die Übertragung eines Nullsignals veranlasst, wodurch das Hebe- und/oder Transportgerät 4 aktiv in einer Ruheposition fixierbar ist.

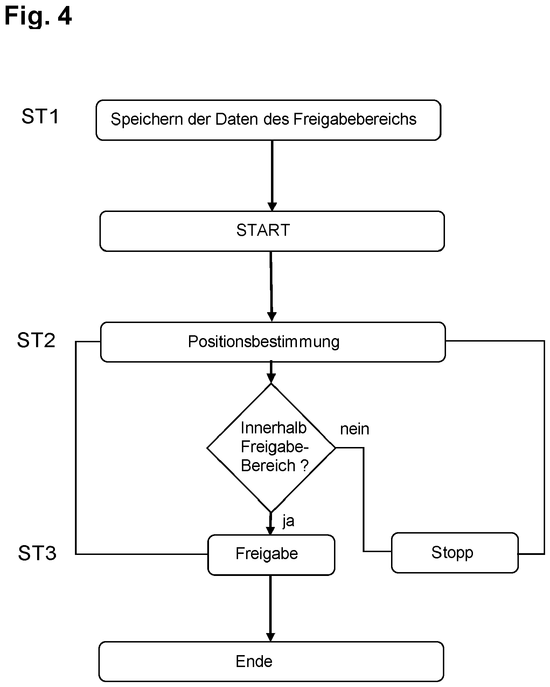

Das Verfahren zum Betrieb der Hebe- und/oder Transportanordnung 2 läuft dabei gemäß Figur 4 wie folgt ab:
Vor dem eigentlichen Betrieb der Hebe- und/oder Transportanordnung 2 werden in einem ersten Schritt die Daten zur Festlegung des Freigabereichs F an der Sicherheitseinrichtung 12 gespeichert. Hierbei können die Daten bereits herstellerseitig aufgespielt werden oder erst später durch den Benutzer B. Dem Benutzer B können hierzu vorzugsweise unterschiedliche Datensätze zur Verfügung gestellt werden können, wie beispielsweise für unterschiedliche Anwendungsfälle beziehungsweise für unterschiedliche Gegenstände oder Lasten, die mit dem Hebe-/Transportgerät 4 verlagert werden sollen. Im Falle eines Hebe-/Transportgerätes 4 in Form eines Flugzeugpushers können beispielsweise unterschiedliche Datensätze zur Verfügung gestellt werden, die jeweils an einen bestimmten Flugzeugtyp und dessen Abmessungen angepasst ist. Die Datensätze können hierzu beispielsweise vom Benutzer B über das Internet beziehungsweise eine entsprechend zur Verfügung gestellte Online-Plattform heruntergeladen werden.

In jedem Fall wird bei diesem ersten Schritt ST1 der Freigabebereich F sowohl hinsichtlich dessen horizontaler Erstreckung, wie beispielsweise in Abhängigkeit von dessen aktuell angesteuerten Bewegungsrichtung B, als auch hinsichtlich der Vertikalerstreckung E begrenzt.

Nach einem Start der Hebe-/Transportanordnung 2, wie insbesondere durch Aktivierung des Hebe-/Transportgerätes 4 sowie des Fernsteuerungssenders 10, wird dann in einem zweiten Schritt ST2 wiederkehrend die jeweils aktuelle Position des Fernsteuerungssenders 10 detektiert und mit dem durch den hinterlegten Datensatz vorgegebenen Freigabebereich F abgeglichen. Dabei wird neben der Ermittlung der horizontalen Position des Hebe-/Transportgerätes 4 zusätzlich die Höhendifferenz HD zwischen dem Fernsteuerungssender 10 und dem Hebe-/Transportgerätes 4 mittels der beiden Höhenmesseinrichtungen 26, 28 beispielsweise barometrisch bestimmt, und daraus die aktuelle Höhenlage H des Fernsteuerungssenders 10 gegenüber dem Hebe-/Transportgerätes 4 ermittelt. Die ermittelte Höhenlage H beziehungsweise die Höhendifferenz HD kann dann mit der Vertikalerstreckung E beziehungsweise dem Höhendifferenzbereich HB abgeglichen werden, um festzustellen, ob der Fernsteuerungssender 10 auch in vertikaler Richtung V innerhalb des Freigabebereichs F angeordnet ist.

Wird bei diesem Abgleich festgestellt, dass der Fernsteuerungssender 10 aktuell innerhalb des Freigabebereichs F angeordnet ist, so wird in einem dritten Schritt ST3 die Übertragung von Steuerungssignalen S vom Fernsteuerungssender 10 an das Hebe-/Transportgerät 4 zur Ausführung eines Steuerungsvorganges entsprechend einer am Fernsteuerungssender 10 eingegebenen Steuerungsanweisung freigegeben.

Wird bei dem Abgleich dagegen festgestellt, dass der Fernsteuerungssender 10 aktuell nicht innerhalb des Freigabebereichs angeordnet ist, so wird im dritten Schritt die Übertragung von Steuerungssignalen S vom Fernsteuerungssender 10 an das Hebe-/Transportgerät 4 unterbunden beziehungsweise gestoppt. Dies erfolgt beispielsweise dadurch, dass die Sendemittel 30 des Fernsteuerungssenders 10 deaktiviert bleiben beziehungsweise blockiert werden oder aber dadurch, dass über die Sendemittel 30 aktive Steuerungssignale, insbesondere in Form von Null-Anweisungen eines Fahrkanals, ausgesendet werden, durch die das Hebe-/Transportgerät 10 aktiv in einer Ruheposition gehalten wird.

Dieser Abgleich der aktuellen Position des Fernsteuerungssender 10 mit der anschließenden Freigabe oder Unterbindung des Steuerungsvorganges gemäß der Schritte ST2 und ST3 wird kontinuierlich wiederkehrend durchgeführt, bis der Betrieb der der Hebe-/Transportanordnung 2 durch Abschalten des Fernsteuerungssenders 10 und/oder des Hebe-/Transportgerätes 2 beendet wird.

## Patentansprüche

1. Hebe- und/oder Transportanordnung (2)
mit einem fernsteuerbaren Hebe- und/oder Transportgerät (4), wie insbesondere einem Flugzeugpusher,
einem Fernsteuerungssender (10) zur Steuerung einer Hub- und/oder Transportbewegung des Hebe- und/oder Transportgerätes (4)
sowie einer Sicherheitseinrichtung (12), an der Daten zur Definition eines sich horizontal erstreckenden virtuellen Freigabebereiches (F) hinterlegt sind und die eine Sensorik (20) zur Ermittlung einer Position des Fernsteuerungssensors (10) aufweist, wobei mittels der Sicherheitseinrichtung (12) ein Steuerungsvorgang des Fernsteuerungssenders (10) in Abhängigkeit einer aktuell detektierten Position des Fernsteuerungssenders (10) gegenüber dem Freigabebereich (F) freigebbar oder unterbindbar ist,
**dadurch gekennzeichnet, dass** der Freigabebereich (F) zusätzlich in einer vertikalen Richtung (V) eine begrenzte Vertikalerstreckung (E) aufweist und die Sensorik (20) der Sicherheitseinrichtung (12) Höhenbestimmungsmittel (24) zur Ermittlung einer Höhenlage des Fernsteuerungssenders (10) aufweist, wobei der Steuerungsvorgang zusätzlich in Abhängigkeit von einer aktuell ermittelten Höhenlage des Fernsteuerungssenders (10) gegenüber der Vertikalerstreckung (E) des Freigabebereichs (F) freigebbar oder unterbindbar ist.

2. Hebe-/Transportanordnung nach Anspruch 1, **dadurch gekennzeichnet, dass** die Vertikalerstreckung (E) des Freigabebereichs (F) durch einen Höhendifferenzbereich (HB) gegenüber dem Hebe- und/oder Transportgerät (4) gebildet ist und die Höhenlage in Form einer Höhendifferenz (HD) des Fernsteuerungssenders (10) gegenüber dem Hebe- und/oder Transportgerät (4) ermittelbar ist.

3. Hebe-/Transportanordnung nach Anspruch 1 oder 2, **dadurch gekennzeichnet, dass** der Freigabebereich (F) eine maximale Höhe (Hmax) von 2 m gegenüber einem Untergrund (U) aufweist.

4. Hebe-/Transportanordnung nach einem der Ansprüche 1 bis 3, **dadurch gekennzeichnet, dass** zur Unterbindung des Steuerungsvorgangs Sendemittel (30) des Fernsteuerungssenders (10) mittels der Sicherheitseinrichtung (12) blockierbar/stoppbar sind.

5. Hebe-/Transportanordnung nach einem der Ansprüche 1 bis 3, **dadurch gekennzeichnet, dass** zur Unterbindung des Steuerungsvorgangs das fernsteuerbare Hebe- und/oder Transportgerät (4) durch Übertragung eines Nullsignals seitens des Fernsteuerungssenders (10) aktiv in einer Ruheposition fixierbar ist.

6. Hebe-/Transportanordnung nach einem der Ansprüche 1 bis 5, **dadurch gekennzeichnet, dass** die Höhenbestimmungsmittel (24) die jeweils aktuelle Höhenlage des Fernsteuerungssenders (10) gegenüber dem Hebe- und/oder Transportgerät (4) wiederkehrend ermitteln.

7. Hebe-/Transportanordnung nach Anspruch 6, **dadurch gekennzeichnet, dass** die Höhenbestimmungsmittel (24) eine erste Höhenmessungseinrichtung (26) am Hebe- und/oder Transportgerät (4) und eine zweite Höhenmesseinrichtung (28) am Fernsteuerungssender (10) aufweisen.

8. Verfahren zum Betrieb einer Hebe-/Transportanordnung nach einem der Ansprüche 1 bis 7, bei dem
in einem ersten Schritt (ST1) der Freigabebereich (F) vorab definiert und in der Sicherheitseinrichtung (12) datenmäßig abgelegt wird,
in einem zweiten Schritt (ST2) eine aktuelle Position des Fernsteuerungssenders (10) detektiert und mit dem hinterlegten Freigabebereich (F) abgeglichen wird und in einem dritten Schritt (ST3) der Steuerungsvorgang entsprechend einer am Fernsteuerungssender (10) eingegebenen Steuerungsanweisung in Abhängigkeit davon freigegeben wird, ob sich der Fernsteuerungssender (10) aktuell im Freigabebereich (F) befindet,
**dadurch gekennzeichnet, dass** im ersten Schritt (ST1) der Freigabebereich (F) auch in vertikaler Richtung (V) begrenzt wird und im zweiten Schritt (ST2) eine aktuelle Höhenlage des Fernsteuerungssenders (10) ermittelt und mit der Vertikalerstreckung (E) des Freigabebereichs (F) abgeglichen wird.

9. Betriebsverfahren nach Anspruch 8, **dadurch gekennzeichnet, dass** im zweiten Schritt (ST2) die Höhenlage des Fernsteuerungssenders (10) in Form von dessen Höhendifferenz (HD) gegenüber dem Hebe- und/oder Transportgerät (4) ermittelt und mit dem Höhendifferenzbereich (HB) des Freigabebereichs (F) abgeglichen wird.

10. Betriebsverfahren nach Anspruch 8 oder 9, **dadurch gekennzeichnet, dass** die Höhendifferenz (HD) im zweiten Schritt (ST2) mittels GPS- beziehungsweise GNSS-Signal, barometrisch, gravimetrisch und/oder trigonometrisch ermittelt wird.

11. Betriebsverfahren nach einem der Ansprüche 8 bis 10, **dadurch gekennzeichnet, dass** im dritten Schritt (ST3) die Sendemittel (30) blockiert werden, wenn die detektierte aktuelle Position des Fernsteuerungssenders (10) außerhalb des Freigabebereiches (F) liegt.

12. Betriebsverfahren nach einem der Ansprüche 8 bis 10, **dadurch gekennzeichnet, dass** im dritten Schritt (ST3) die Sendemittel (30) aktive Steuerungssignale (S) aussenden, mittels denen das Hebe- und/oder Transportgerät (4) in einer Ruheposition gehalten wird, wenn die detektierte aktuelle Position des Fernsteuerungssenders (10) außerhalb des Freigabebereiches (F) liegt.

## Claims

1. A lifting and/or transporting arrangement (2),
with a remote-controllable lifting and/or transporting device (4), such as, in particular, an aircraft pusher,
a remote-control transmitter (10) for controlling a lifting and/or transporting movement of the lifting and/or transporting device (4)
and a safety apparatus (12) on which data for defining a horizontally extending virtual enablement area (F) are stored and which has a sensor system (20) for detecting a position of the remote-control transmitter (10), wherein by means of the safety apparatus (12), a control process of the remote-control transmitter (10) can be enabled or disabled depending on a currently detected position of the remote-control transmitter (10) relative to the enablement area (F),
**characterised in that** the enablement area (F) additionally has a limited vertical extent (E) in a vertical direction (V) and the sensor system (20) of the safety apparatus (12) has height determination means (24) for detecting a height position of the remote-control transmitter (10), wherein the control process can additionally be enabled or disabled depending on a currently detected height position of the remote-control transmitter (10) relative to the vertical extent (E) of the enablement area (F).

2. The lifting/transporting arrangement according to claim 1, **characterised in that** the vertical extent (E) of the enablement area (F) is formed by a height difference area (HB) relative to the lifting and/or transporting device (4) and the height position can be detected in the form of a height difference (HD) of the remote-control transmitter (10) relative to the lifting and/or transporting device (4).

3. The lifting/transporting arrangement according to claim 1 or 2, **characterised in that** the enablement area (F) has a maximum height (Hmax) of 2 m relative to a ground (U).

4. The lifting/transporting arrangement according to any one of claims 1 to 3, **characterised in that** transmitting means (30) of the remote-control transmitter (10) can be blocked/stopped by means of the safety apparatus (12) in order to disable the control process.

5. The lifting/transporting arrangement according to any one of claims 1 to 3, **characterised in that**, in order to disable the control process, the remote-controllable lifting and/or transporting device (4) can be actively fixed in a rest position through transmission of a zero signal by the remote-control transmitter (10).

6. The lifting/transporting arrangement according to any one of claims 1 to 5, **characterised in that** the height determination means (24) detect the respective current height position of the remote-control transmitter (10) relative to the lifting and/or transporting device (4) in a recurring manner.

7. The lifting/transporting arrangement according to claim 6, **characterised in that** the height determination means (24) have a first height measurement apparatus (26) on the lifting and/or transporting device (4) and a second height measurement apparatus (28) on the remote-control transmitter (10).

8. A method for operating the lifting/transporting arrangement according to any one of claims 1 to 7, in which,
in a first step (ST1), the enablement area (F) is defined in advance and stored in the safety apparatus (12) in data form,
in a second step (ST2), a current position of the remote-control transmitter (10) is detected and compared with the stored enablement area (F), and
in a third step (ST3), the control process is enabled in accordance with a control instruction input at the remote-control transmitter (10) depending on whether the remote-control transmitter (10) is currently located in the enablement area (F),
**characterised in that**, in the first step (ST1), the enablement area (F) is also limited in the vertical direction (V), and, in the second step (ST2), a current height position of the remote-control transmitter (10) is detected and compared with the vertical extent (E) of the enablement area (F).

9. The operating method according to claim 8, **characterised in that**, in the second step (ST2), the height position of the remote-control transmitter (10) is detected in the form of its height difference (HD) with respect to the lifting and/or transporting device (4) and is compared with the height difference area (HB) of the enablement area (F).

10. The operating method according to claim 8 or 9, **characterised in that** the height difference (HD) is detected in the second step (ST2) by means of a GPS or GNSS signal, barometrically, gravimetrically and/or trigonometrically.

11. The operating method according to any one of claims 8 to 10, **characterised in that**, in the third step (ST3), the transmitting means (30) are blocked when the detected current position of the remote-control transmitter (10) is outside the enablement area (F).

12. The operating method according to any one of claims 8 to 10, **characterised in that**, in the third step (ST3), the transmitting means (30) transmit active control signals (S) by means of which the lifting and/or transporting device (4) is held in a rest position when the detected current position of the remote-control transmitter (10) lies outside the enablement area (F).

## Revendications

1. Agencement de levage et/ou de transport (2)
avec un appareil de levage et/ou de transport (4) pouvant être commandé à distance, comme en particulier un tracteur d'avion,
un émetteur de télécommande (10) pour la commande d'un mouvement de levage et/ou de transport de l'appareil de levage et/ou de transport (4)
ainsi qu'un appareil de sécurité (12), sur lequel des données sont enregistrées pour définir une zone d'approbation virtuelle (F) s'étendant horizontalement et qui présente un système de capteurs (20) pour déterminer une position de l'émetteur de télécommande (10), dans lequel un processus de commande de l'émetteur de télécommande (10) peut être activé ou désactivé au moyen de l'appareil de sécurité (12) en fonction d'une position actuellement détectée de l'émetteur de télécommande (10) par rapport à la zone d'approbation (F),
**caractérisé en ce que** la zone d'approbation (F) présente en outre dans une direction verticale (V) une étendue verticale limitée (E), et le système de capteurs (20) de l'appareil de sécurité (12) présente des moyens de détermination de hauteur (24) pour déterminer une position de hauteur de l'émetteur de télécommande (10), dans lequel le processus de commande peut être activé ou désactivé en outre en fonction d'une position de hauteur actuellement déterminée de l'émetteur de télécommande (10) par rapport à l'étendue verticale (E) de la zone d'approbation (F).

2. Agencement de levage/transport selon la revendication 1, **caractérisé en ce que** l'étendue verticale (E) de la zone d'approbation (F) est formée par une zone de différence de hauteur (HB) par rapport à l'appareil de levage et/ou de transport (4), et la position de hauteur peut être déterminée sous forme d'une différence de hauteur (HD) de l'émetteur de télécommande (10) par rapport à l'appareil de levage et/ou de transport (4).

3. Agencement de levage/transport selon la revendication 1 ou 2, **caractérisé en ce que** la zone d'approbation (F) présente une hauteur maximale (Hmax) de 2 m par rapport à un sol (U).

4. Agencement de levage/transport selon l'une quelconque des revendications 1 à 3, **caractérisé en ce que** des moyens d'émission (30) de l'émetteur de télécommande (10) peuvent être bloqués/arrêtés au moyen de l'appareil de sécurité (12) pour désactiver le processus de commande.

5. Agencement de levage/transport selon l'une quelconque des revendications 1 à 3, **caractérisé en ce que** l'appareil de levage et/ou de transport (4) pouvant être commandé à distance peut être fixé activement dans une position de repos par transmission d'un signal nul depuis l'émetteur de télécommande (10) pour désactiver le processus de commande.

6. Agencement de levage/transport selon l'une quelconque des revendications 1 à 5, **caractérisé en ce que** les moyens de détermination de hauteur (24) déterminent de manière récurrente la position de hauteur actuelle de l'émetteur de télécommande (10) par rapport à l'appareil de levage et/ou de transport (4).

7. Agencement de levage/transport selon la revendication 6, **caractérisé en ce que** les moyens de détermination de hauteur (24) présentent un premier appareil de mesure de hauteur (26) sur l'appareil de levage et/ou de transport (4) et un deuxième appareil de mesure de hauteur (28) sur l'émetteur de télécommande (10).

8. Procédé de fonctionnement d'un agencement de levage/transport selon l'une quelconque des revendications 1 à 7, dans lequel
dans une première étape (ST1), la zone d'approbation (F) est préalablement définie et stockée sous forme de données dans l'appareil de sécurité (12),
dans une deuxième étape (ST2), une position actuelle de l'émetteur de télécommande (10) est détectée et comparée à la zone d'approbation (F) stockée, et
dans une troisième étape (ST3), le processus de commande est activé conformément à une instruction de commande entrée sur l'émetteur de télécommande (10) en fonction du fait que l'émetteur de télécommande (10) se trouve ou non actuellement dans la zone d'approbation (F),
**caractérisé en ce que** dans la première étape (ST1), la zone d'approbation (F) est également limitée dans la direction verticale (V) et dans la deuxième étape (ST2), une position de hauteur actuelle de l'émetteur de télécommande (10) est déterminée et comparée à l'étendue verticale (E) de la zone d'approbation (F).

9. Procédé de fonctionnement selon la revendication 8, **caractérisé en ce que** dans la deuxième étape (ST2), la position de hauteur de l'émetteur de télécommande (10) est déterminée sous forme de sa différence de hauteur (HD) par rapport à l'appareil de levage et/ou de transport (4) et comparée à la zone de différence de hauteur (HB) de la zone d'approbation (F).

10. Procédé de fonctionnement selon la revendication 8 ou 9, **caractérisé en ce que** la différence de hauteur (HD) est déterminée dans la deuxième étape (ST2) au moyen d'un signal GPS ou GNSS, barométrique, gravimétrique et/ou trigonométrique.

11. Procédé de fonctionnement selon l'une quelconque des revendications 8 à 10, **caractérisé en ce que**, dans la troisième étape (ST3), les moyens d'émission (30) sont bloqués lorsque la position actuelle détectée de l'émetteur de télécommande (10) se situe hors de la zone d'approbation (F).

12. Procédé de fonctionnement selon l'une quelconque des revendications 8 à 10, **caractérisé en ce que**, dans la troisième étape (ST3), les moyens d'émission (30) émettent des signaux de commande actifs (S) au moyen desquels l'appareil de levage et/ou de transport (4) est maintenu dans une position de repos lorsque la position actuelle détectée de l'émetteur de télécommande (10) se situe hors de la zone d'approbation (F).
